# EUROPÄISCHE PATENTSCHRIFT

(11) **EP 3 356 098 B1**
(45) Veröffentlichungstag und Bekanntmachung des Hinweises auf die Patenterteilung: **04.11.2026**
(21) Anmeldenummer: 16778222.6
(22) Anmeldetag: 16.09.2016
(51) Int. Cl.: B27F 1/02, B27M 1/08, B23Q 7/04, B23Q 39/02, B23Q 39/04

(54) **BEARBEITUNGSVORRICHTUNG**
MACHINING DEVICE
DISPOSITIF D'USINAGE

(30) Priorität: 29.09.2015 DE 102015218814
(43) Veröffentlichungstag der Anmeldung: 08.08.2018
(73) Patentinhaber: HOMAG GmbH, 72296 Schopfloch (DE)
(72) Erfinder: SCHMIEDER, Volker, 72116 Mössingen (DE)
(74) Vertreter: Hoffmann Eitle
(86) Internationale Anmeldenummer: PCT/EP2016/072044
(87) Internationale Veröffentlichungsnummer: WO 2017/055111

(56) Entgegenhaltungen:
- EP-A1- 1 600 254
- EP-A1- 1 810 802
- EP-A1- 2 363 260
- EP-A2- 1 304 188
- EP-A2- 2 105 269
- DE-A1- 10 137 839
- DE-A1- 102014 013 423
- US-A- 4 647 028
- US-A- 5 653 273
- US-B1- 6 412 764

## Beschreibung

### Technisches Gebiet

Die Erfindung betrifft eine Bearbeitungsvorrichtung, insbesondere zum Bearbeiten von Werkstücken aus Holz, Holzwerkstoffen, Kunststoff oder dergleichen, nach dem Oberbegriff von Anspruch 1.

### Stand der Technik

Bearbeitungsvorrichtungen zur Bearbeitung von Werkstücken, insbesondere zum Bearbeiten von Werkstücken aus Holz, Holzwerkstoffen, Kunststoff oder dergleichen, sind im Stand der Technik vielfach bekannt. Solche Bearbeitungsvorrichtungen weisen üblicherweise einen Werkstücktisch mit einer Werkstückhalterung auf, mittels welcher ein Werkstück anordenbar und zumindest zeitweise klemmend haltbar ist, um während der klemmenden Halterung das Werkstück zu bearbeiten. Solche Werkstücktische mit Werkstückhalterungen können im Wesentlichen stillstehend oder mittels Vorschubeinrichtungen verfahrbar ausgebildet sein.

Dabei kann bei einer im Wesentlichen stillstehenden Ausführung des Werkstücktischs mit der Werkstückhalterung das Werkzeug zur Bearbeitung des Werkstücks an das Werkstück selbst herangeführt werden, um aufgrund einer erzeugten Relativbewegung von Werkstück und Werkzeug eine Bearbeitung des Werkstücks zu bewirken.

Alternativ dazu kann bei einer im Wesentlichen verfahrbaren Ausführung des Werkstücktischs mit der Werkstückhalterung das Werkstück zur Bearbeitung an das Werkzeug selbst herangeführt werden, um aufgrund einer erzeugten Relativbewegung von Werkstück und Werkzeug eine Bearbeitung des Werkstücks zu bewirken.

Dazu kann die Bearbeitungsvorrichtung beispielsweise ein stillstehendes oder verfahrbares Portal oder einen stillstehenden oder verfahrbaren Ausleger oder Ähnliches aufweisen, an welchem das Werkzeug zur Bearbeitung des Werkstücks wiederum stillstehend oder verlagerbar geführt werden kann, um zusammen mit einer etwaigen Verlagerung des Werkstücks die beabsichtigten Bearbeitungen am Werkstück vornehmen zu können. Dabei kann entweder das Werkstück am Werkzeug vorbeigeführt werden oder umgekehrt oder es können sich auch sowohl das Werkstück als auch das Werkzeug bei der Bearbeitung verlagern, so dass eine gezielte Relativbewegung zwischen Werkzeug und Werkstück vorgesehen wird, um das Werkstück beispielsweise entlang einer Seite oder Kante bearbeiten zu können.

So ist durch die DE 101 37 839 A1 bekannt geworden, dass zwei Werkstücktische nebeneinander verlagerbar angeordnet werden, wobei entweder der eine Werkstücktisch oder der andere Werkstücktisch das Werkstück mit seiner Werkstückhalterung hält, während der Werkstücktisch mittels seiner Vorschubeinrichtungen am Werkzeug vorbei geführt wird, um eine Seitenkante des Werkstücks zu bearbeiten. Anschließend kann der eine Werkstücktisch zu dem anderen Werkstücktisch in eine Übergabeposition verfahren und das Werkstück kann von dem einen Werkstücktisch direkt auf den anderen Werkstücktisch ohne Lageänderung umgespannt werden, so dass anschließend die noch nicht bearbeitete andere Seitenkante des Werkstücks bearbeitet werden kann.

Dabei ist die notwendige Höhe des Werkstücks für die Einspannung jedoch konstant, weil die Spannbacken der Werkstückhalterung des Werkzeugtischs fest vorgegeben sind und die unteren Spannbacken auf dem Werkzeugtisch in ihrer Höhe festgelegt sind. Soll damit jedoch ein Werkstück mit einer Kontur bearbeitet werden, die auf beiden gegenüberliegenden Seitenkanten unterschiedlich hoch ist, weil beispielsweise die jeweilige Unterkante versetzt zueinander ausgebildet sein soll, so kann dieses Werkstück nicht ohne Weiteres mittels der so ausgebildeten Bearbeitungsvorrichtung bearbeitet werden, weil beim Umspannen von einem Werkstücktisch zum anderen Werkstücktisch kein definierter Zustand zum Umspannen vorliegt.

Bei der Herstellung von Fensterrahmenteilen, insbesondere aus Holz, muss ein sehr großer Umfang an verschiedenen Profilen erzeugt werden, was üblicherweise durch Fräsen durchgeführt wird. Dabei sind auch üblicherweise die Längs- als auch die Schmalseiten der Rahmenteile zu bearbeiten. Um den immer häufiger gewünschten vermehrten Lichteinfall insbesondere in Wohnräumen zu gestatten, werden die Breiten der Fensterrahmenteile immer weiter reduziert. Dies führt dazu, dass nur noch sehr begrenzte freie Klemmflächen an den Fensterrahmenteilen zum Halten der Fensterrahmenteile in den Spannbacken der Werkstückhalterung für die spanende Bearbeitung des Werkstücks zur Verfügung stehen, wobei dieses Problem immer häufiger auftritt, wenn eine erste Längsseite des Fensterrahmenteils bereits profiliert wurde.

Bei Werkstücktischen gemäß der DE 101 37 839 A1 liegen die vorgesehenen Spannbacken der Werkstückhalterung als Fixierelemente auf der unteren und auf der oberen Auflagefläche des Fensterrahmenteils auf und klemmen so das Werkstück zwischen sich ein. Dies hat zwar den Vorteil, dass das Werkstück bei Spann- und Umspannvorgängen ein konstantes Höhenniveau in Vertikalrichtung und ggf. auch eine konstante Lage in Lateralrichtung beibehalten kann, es hat jedoch auch den Nachteil, dass nur auf den oberen und unteren Auflageflächen gespannt werden kann.

Bei modernen Fernsterrahmenteilen als Werkstücke ist es jedoch immer häufiger notwendig, dass das Werkstück auch in bereits bearbeiteten Bereichen der seitlichen Profilierung, also beispielsweise in bereits erzeugten Falzen gespannt werden kann.

Dokument US 5 653 273 A offenbart eine Bearbeitungsvorrichtung gemäß dem Oberbegriff des Patentanspruchs 1.

### Darstellung der Erfindung, Aufgabe, Lösung, Vorteile

Es ist die Aufgabe der Erfindung, eine Bearbeitungsvorrichtung zu schaffen, welche auch bei kürzeren Werkstücken eine deutliche Steigerung der Bearbeitungseffizienz ermöglicht. Auch ist es die Aufgabe der Erfindung, ein diesbezügliches Verfahren zu schaffen.

Diese Aufgabe zur Bearbeitungsvorrichtung wird mit den Merkmalen von Anspruch 1 gelöst.

Ein Ausführungsbeispiel der Erfindung betrifft eine Bearbeitungsvorrichtung, insbesondere zum Bearbeiten von Werkstücken aus Holz, Holzwerkstoffen, Kunststoff oder dergleichen, mit zumindest einem Werkstücktisch mit einer ersten Werkstückhalterung zum Halten zumindest eines Werkstücks, weiterhin mit einer zweiten Werkstückhalterung zum Halten zumindest eines Werkstücks, wobei das Werkstück bei einem Umspannen von der ersten Werkstückhalterung in die zweite Werkstückhalterung in zumindest zwei Dimensionen, vorteilhaft in drei Dimensionen, positionierbar ist. Dabei ist vorgesehen, dass das Werkstück unmittelbar von der ersten Werkstückhalterung zur zweiten Werkstückhalterung oder umgekehrt übergeben wird bzw. übergeben werden kann, ohne dass ein Manipulator oder eine weitere Zuführvorrichtung vorgesehen ist oder die Übergabe vornimmt. So wird erreicht, dass auch Werkstücke, die zuvor beispielsweise bereits einseitig bearbeitet sind und gegebenenfalls nicht mehr die volle seitliche Höhe aufweisen, durch Verlagerung bzw. entsprechende Positionierung in die jeweils Werkstückhalterung einpassbar sind und darin lagerichtig für eine weitergehende Bearbeitung gehalten werden können.

Es ist vorgesehen, dass die erste Werkstückhalterung relativ zur zweiten Werkstückhalterung und/oder die zweite Werkstückhalterung relativ zur ersten Werkstückhalterung in zumindest zwei, vorteilhaft in drei Dimensionen, verlagerbar ist. Dadurch wird erreicht, dass ein Werkstück in einer Werkstückhalterung derart positionierbar ist, dass es in die andere Werkstückhalterung einpassbar ist, und insbesondere in einer anderen Lage einpassbar ist als es in der Werkstückhalterung vor der Übergabe positioniert ist bzw. war.

Besonders vorteilhaft ist es, wenn ein Werkstücktisch vorgesehen ist, insbesondere nur ein Werkstücktisch, und die erste Werkstückhalterung und/oder die zweite Werkstückhalterung relativ zu dem Werkstücktisch verlagerbar angeordnet ist bzw. sind. Dabei kann der Werkstücktisch verlagerbar oder auch feststehend ausgebildet sein, wobei das Werkstück dann entweder mit dem Werkstücktisch verlagert wird, um es zu bearbeiten oder es kann mit dem Werkstücktisch auch stillstehen, während beispielsweise ein verfahrbares Werkzeug vorgesehen ist, um das Werkstück zu bearbeiten.

Besonders vorteilhaft ist es auch, wenn zwei verlagerbare Werkstücktische vorgesehen sind, wobei die erste Werkstückhalterung mit einem ersten Werkstücktisch verbunden und mit diesem verlagerbar angeordnet ist und die zweite Werkstückhalterung mit dem zweiten Werkstücktisch verbunden und mit diesem verlagerbar angeordnet ist. Dabei kann das Werkstück mit dem jeweiligen ersten oder zweiten Werkstücktisch verlagert werden, je nach dem, in welche Werkstückhalterung das Werkstück eingespannt ist.

Dabei ist es auch vorteilhaft, wenn die erste Werkstückhalterung eine Mehrzahl von ersten Spannelementen aufweist, die an dem ersten Werkstücktisch angeordnet sind, wobei die ersten Spannelemente erste und zweite Spannbacken aufweisen, die relativ zueinander und insbesondere auch zum ersten Werkstücktisch in zumindest einer Dimension oder in zwei Dimensionen verlagerbar sind und wobei die zweite Werkstückhalterung eine Mehrzahl von zweiten Spannelementen aufweist, die an dem zweiten Werkstücktisch angeordnet sind, wobei die zweiten Spannelemente erste und zweite Spannbacken aufweisen, die relativ zueinander und insbesondere auch zum zweiten Werkstücktisch in zumindest einer Dimension oder in zwei Dimensionen verlagerbar sind. So kann eine entsprechende Verlagerung und Positionierung des Werkstücks in einer Einspannung einer Werkstückhalterung erfolgen, um es in einer weiteren Einspannung einer anderen Werkstückhalterung zu übergeben.

Dabei ist es besonders vorteilhaft, wenn der erste und/oder der zweite Werkstücktisch in einer Längsrichtung verlagerbar ist bzw. sind. Dadurch kann eine effektive Bearbeitung eines Werkstücks oder von Werkstücken erfolgen, weil die Werkstücktische gegebenenfalls auch abwechselnd verfahrbar sind und an Werkzeugen vorbei geführt werden können, um eine Bearbeitung zu erreichen.

Besonders vorteilhaft ist es, wenn der erste und/oder der zweite Werkstücktisch in einer zur Längsrichtung senkrechten ersten Richtung verlagerbar ist bzw. sind. So kann beispielsweise erreicht werden, dass die Spannelemente oder die Werkstückhalterungen aufeinander zu verfahrbar sind, um das Werkstück zu übergeben.

Auch ist es alternativ oder zusätzlich vorteilhaft, wenn die ersten Spannelemente bzw. deren erste und/oder zweite Spannbacken jeweils in einer ersten senkrecht zur Längsrichtung ausgerichteten Richtung verlagerbar sind und gegebenenfalls in einer zweiten senkrecht zur Längsrichtung und zur ersten Richtung ausgerichteten Richtung verlagerbar sind und/oder die zweiten Spannelemente bzw. deren erste und/oder zweite Spannbacken jeweils in einer ersten senkrecht zur Längsrichtung ausgerichteten Richtung verlagerbar sind und gegebenenfalls in einer zweiten senkrecht zur Längsrichtung und zur ersten Richtung ausgerichteten Richtung verlagerbar sind. Auch so kann eine Verlagerung des Werkstücks erfolgen, um eine Übergabe des Werkstücks von einer Werkstückhalterung zu einer zweiten Werkstückhalterung zu erreichen.

Auch ist es bei einer weiteren Ausgestaltung vorteilhaft, wenn der eine Werkstücktisch nicht verlagerbar angeordnet ist. So kann dieser als feststehende Konsole aufgebaut sein, wobei dabei das für die Bearbeitung des Werkstücks vorgesehene Werkzeug entsprechend vorteilhaft verfahrbar ist.

Weiterhin ist es zweckmäßig, wenn die erste Werkstückhalterung eine Mehrzahl von ersten Spannelementen aufweist, die an dem Werkstücktisch angeordnet sind, wobei die ersten Spannelemente erste und zweite Spannbacken aufweisen, die relativ zueinander und insbesondere auch zum Werkstücktisch in zumindest einer Dimension oder in zwei Dimensionen verlagerbar sind und wobei die zweite Werkstückhalterung eine Mehrzahl von zweiten Spannelementen aufweist, die an dem Werkstücktisch angeordnet sind, wobei die zweiten Spannelemente erste und zweite Spannbacken aufweisen, die relativ zueinander und insbesondere auch zum Werkstücktisch in zumindest einer Dimension oder in zwei Dimensionen verlagerbar sind.

Dabei ist es auch vorteilhaft, wenn die ersten Spannelemente bzw. deren erste und/oder zweite Spannbacken auch in dritten Dimension verlagerbar sind und/oder die zweiten Spannelemente bzw. deren erste und/oder zweite Spannbacken auch in einer dritten Dimension verlagerbar sind.

Gemäß der Erfindung ist es auch vorteilhaft, wenn eine Zuführvorrichtung vorgesehen ist, mittels welcher ein Werkstück einer der Werkstückhalterungen zuführbar ist.

Bearbeiten im Sinne der Erfindung bedeutet ein Fräsen, Sägen, Bohren, Beschriften, Bekleben, Beschichten, Verleimen und/oder Oberflächenbehandeln etc.

Weitere vorteilhafte Ausgestaltungen sind durch die nachfolgende Figurenbeschreibung und durch die Unteransprüche beschrieben.

### Kurze Beschreibung der Zeichnungen

Nachstehend wird die Erfindung auf der Grundlage zumindest eines Ausführungsbeispiels anhand der Zeichnungen näher erläutert. Es zeigen:
- Figur 1: eine schematische Darstellung zur Erläuterung einer erfindungsgemäßen Bearbeitungsvorrichtung,
- Figur 2: eine schematische Darstellung zur Erläuterung einer erfindungsgemäßen Bearbeitungsvorrichtung,
- Figur 3: eine perspektivische Darstellung einer erfindungsgemäßen Bearbeitungsvorrichtung,
- Figur 4: eine weitere perspektivische Darstellung der Bearbeitungsvorrichtung gemäß Figur 3,
- Figur 5: eine perspektivische Darstellung einer weiteren erfindungsgemäßen Bearbeitungsvorrichtung,
- Figur 6: eine schematische Darstellung zur Erläuterung einer weiteren erfindungsgemäßen Bearbeitungsvorrichtung, und
- Figur 7: eine schematische Darstellung zur Erläuterung der erfindungsgemäßen Bearbeitungsvorrichtung.

### Bevorzugte Ausführung der Erfindung

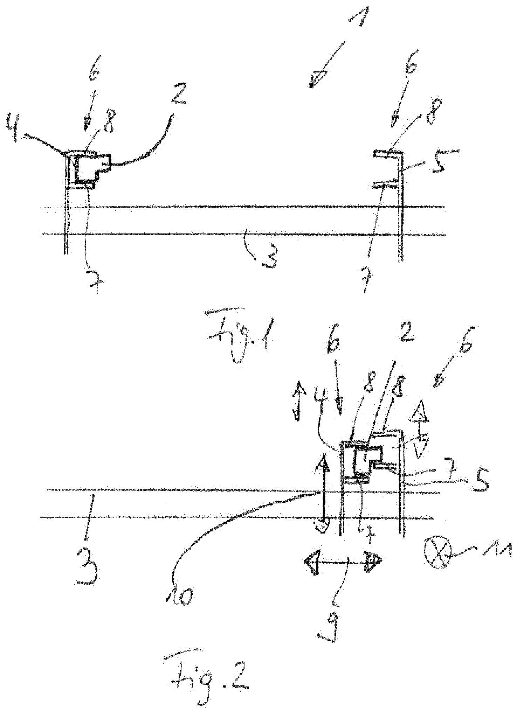

Die Figuren 1 und 2 zeigen jeweils in einer schematischen Darstellung zur Erläuterung der Erfindung eine Betriebssituation, in welcher eine erfindungsgemäße Bearbeitungsvorrichtung sein kann, um ein Werkstück von einer Werkstückhalterung zu einer anderen Werkstückhalterung zu übergeben.

Die erfindungsgemäße Bearbeitungsvorrichtung 1, insbesondere zum Bearbeiten von Werkstücken 2 aus Holz, Holzwerkstoffen, Kunststoff oder dergleichen, weist zumindest einen Werkstücktisch 3 auf. Auf dem Werkstücktisch 3 kann das Werkstück 2 mittels einer Werkstückhalterung 4, 5 aufgespannt und somit lagefest gehalten werden, so dass es bearbeitet werden kann.

Die erfindungsgemäße Bearbeitungsvorrichtung 1 weist zumindest eine erste Werkstückhalterung 4 zum Halten zumindest eines Werkstücks 2 auf, wobei weiterhin zumindest eine zweite Werkstückhalterung 5 zum Halten zumindest eines Werkstücks 2 vorgesehen ist. Dabei ist es zweckmäßig, wenn zumindest zwei solche Werkstückhalterungen 4, 5 vorgesehen sind, weil eine vollständige Bearbeitung eines Werkstücks 2 in einer Aufspannung in einer Werkstückhalterung 4, 5 meist nicht möglich ist, so dass in einer Aufspannung in einer Werkstückhalterung 4, 5 das Werkstück 2 nur teilweise bearbeitet wird, anschließend das Werkstück 2 in eine zweite Werkstückhalterung 5, 4 umgespannt wird und danach weiter bearbeitet wird.

Die Figur 1 zeigt, dass die beiden Werkstückhalterungen 4, 5 voneinander entfernt angeordnet sind, wobei das Werkstück 2 in der Werkstückhalterung 4 eingespannt ist. Dabei weisen die Werkstückhalterung 4 und auch die Werkstückhalterung 5 jeweils Spannelemente 6 auf, die erste Spannbacken 7 und zweite Spannbacken 8 aufweisen, welche relativ zueinander verfahrbar sind, um ein Werkstück 2 dazwischen einspannen zu können. Die ersten Spannbacken 7 sind beispielsweise die unteren Spannbacken und die zweiten Spannbacken 8 sind beispielsweise die oberen Spannbacken. In Figur 1 ist zu erkennen, dass die beiden Werkstückhalterungen mit ihren Spannbacken auf gleicher vertikaler Höhe angeordnet sind. Dies kann eine vertikale Position sein, in welcher eine Bearbeitung des Werkstücks 2 mittels eines nicht gezeigten Werkzeugs durchführbar ist. In Figur 1 ist zu erkennen, dass die rechte Seite des Werkstücks 2 bearbeitet ist, während die linke Seite des Werkstücks 2 in der Werkstückhalterung 4 eingeklemmt ist.

In Figur 2 ist zu erkennen, dass die Werkstückhalterung 4 relativ zu dem Werkstücktisch 3 hin zur Werkstückhalterung 5 verlagert ist. Die Werkstückhalterung 4 ist dabei relativ zur Werkstückhalterung 5 entlang der Richtung gemäß Pfeil 9, der Längsrichtung, verschiebbar ausgebildet. Die Verschiebung kann mittels eines Antriebs oder manuell erfolgen. Auch ist in Figur 2 zu erkennen, dass die Werkstückhalterung 4 relativ zur Höhe der Werkstückhalterung 5 und zum Werkstücktisch 3 in vertikaler Richtung gemäß Pfeil 10 nach unten verlagert ist. Dabei ist die Werkstückhalterung 4 mit den Spannbacken 7, 8 als Ganzes mit dem eingespannten Werkstück 2 nach unten verschoben. So kann das Werkstück lateral in die auseinandergefahrenen Spannbacken 7, 8 der Werkstückhalterung 5 eingefahren und dort im Wesentlichen durch Herabfahren der Spannbacken 8 geklemmt werden. Dadurch wird erreicht, dass das Werkstück in vertikaler Richtung 10 versetzt in die Werkstückhalterung 5 eingesetzt und darin gespannt wird.

Das Werkstück 2 kann also bei einem Umspannen von der ersten Werkstückhalterung 4 in die zweite Werkstückhalterung 5 in zumindest zwei Dimensionen, also entlang Pfeil 9 und entlang Pfeil 10, positioniert werden. Vorteilhaft mag es bei einem anderen Ausführungsbeispiel auch sein, wenn das Werkstück 2 auch noch in einer dritten Dimension gemäß Pfeil 11 positionierbar ist.

Dabei ist also die erste Werkstückhalterung 4 relativ zur zweiten Werkstückhalterung 5 und/oder die zweite Werkstückhalterung 5 relativ zur ersten Werkstückhalterung 4 in zumindest zwei, vorteilhaft in drei Dimensionen, verlagerbar. Dadurch kann je nach Bearbeitung des Werkstücks 2 und seiner Kontur nach der Bearbeitung dieses positioniert werden, wie es nötig ist, um es in die jeweils andere Werkstückhalterung 4, 5 umzuspannen.

Gemäß dem Ausführungsbeispiel der Figur 1 ist ein Werkstücktisch 3 vorgesehen, insbesondere nur ein Werkstücktisch 3, und die erste Werkstückhalterung 4 und/oder die zweite Werkstückhalterung 5 ist bzw. sind relativ zu dem Werkstücktisch 3 verlagerbar angeordnet.

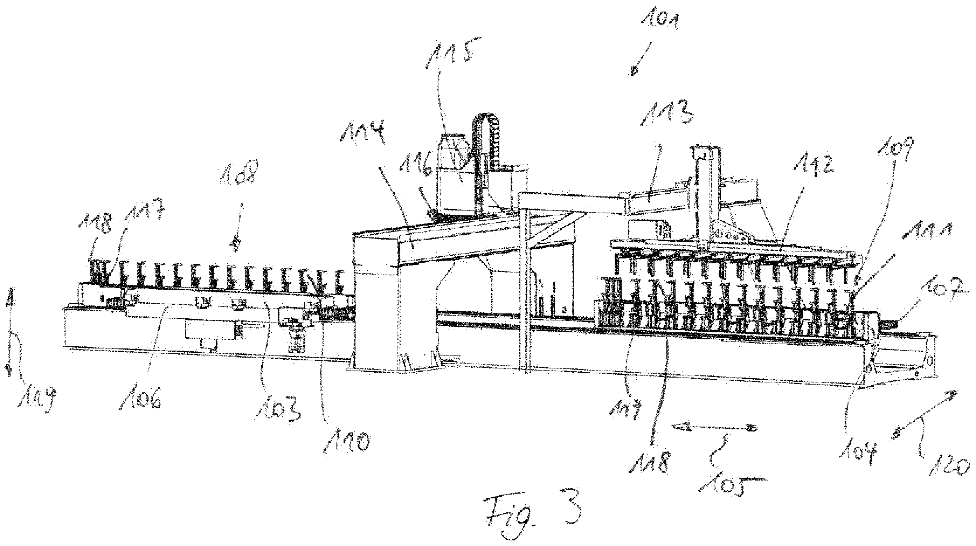

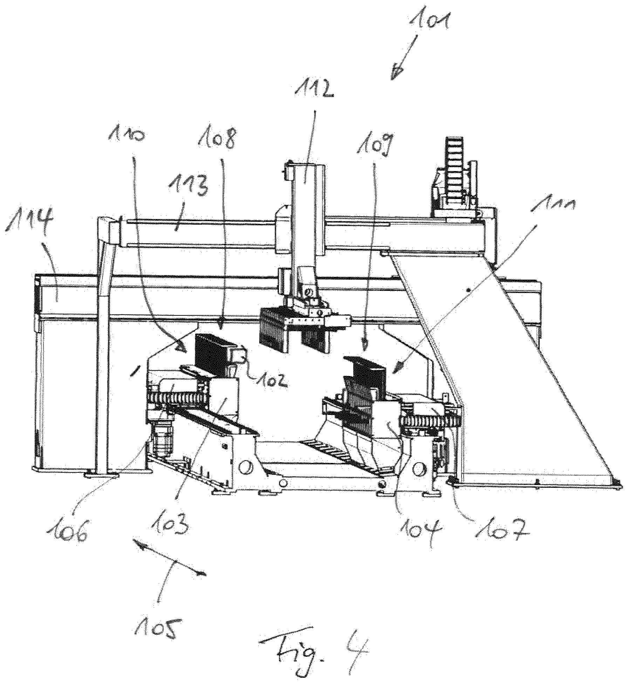

Alternativ können auch zwei insbesondere verlagerbare Werkstücktische vorgesehen sein, wobei die erste Werkstückhalterung mit einem ersten Werkstücktisch verbunden ist und mit diesem verlagerbar angeordnet ist und wobei die zweite Werkstückhalterung mit dem zweiten Werkstücktisch verbunden und mit diesem verlagerbar angeordnet ist. Dies zeigen die Figuren 3 und 4.

Die Figuren 3 und 4 zeigen eine Bearbeitungsvorrichtung 101, insbesondere zum Bearbeiten von Werkstücken 102 aus Holz, Holzwerkstoffen, Kunststoff oder dergleichen. Dabei können die Werkstücke 102 beispielsweise eher längliche, balkenartige Werkstücke oder eher flache, eher zweidimensionale, brettartige Werkstücke sein.

Die Bearbeitungsvorrichtung 101 weist einen ersten Werkstücktisch 103 und einen zweiten Werkstücktisch 104 auf. Die beiden Werkstücktische 103, 104 sind in ihrer Längsrichtung gemäß Pfeil 105 verlagerbar ausgebildet und können mittels einer Vorschubeinrichtung 106, 107 in Längsrichtung verlagert werden.

Die beiden Werkstücktische 103, 104 weisen jeweils eine Werkstückhalterung 108, 109 mit Spannelementen 110, 111 zum Spannen eines Werkstücks 102 auf, mittels welcher Werkstücke 102 zur Bearbeitung sicher gehalten werden können.

Weiterhin ist eine Zuführvorrichtung 112 vorgesehen, welche dazu dient, ein Werkstück 102 der Werkstückhalterung 108, 109 des Werkstücktischs 103, 104 zuzuführen und das Werkstück 102 auf dem entsprechenden Werkstücktisch 103, 104 zu platzieren.

Weiterhin ist ein Vorrichtungsgestell 113 vorgesehen, an welchem die Zuführvorrichtung 112, auch Manipulator genannt, verlagerbar angeordnet ist. Auch ist eine Führungsvorrichtung 114 vorgesehen, die vorteilhaft als Portal oder als Traverse ausgebildet ist, an welcher ein Werkzeugschlitten 115 verlagerbar angeordnet ist, um ein Werkzeug 116 verlagern zu können. Dadurch kann das Werkstück 102 in Längsrichtung des Werkstücktischs 103, 104 verlagert werden und dabei an dem Werkzeug 116 zur Bearbeitung vorbeigeführt werden.

Die Bearbeitungsvorrichtung 101 weist somit eine erste Werkstückhalterung 108 mit einer Mehrzahl von ersten Spannelementen 110 auf, die an dem ersten Werkstücktisch 103 angeordnet sind, wobei die ersten Spannelemente 110 erste Spannbacken 117 und zweite Spannbacken 118 aufweisen, die relativ zueinander und insbesondere auch zum ersten Werkstücktisch 103 in zumindest einer Dimension oder in zwei Dimensionen verlagerbar sind. Dabei sind die Spannbacken 117, 118 zumindest in der vertikalen Richtung 119 und gegebenenfalls in der dazu senkrechten Richtung 120 relativ zum Werkstücktisch 103 verlagerbar.

Die Bearbeitungsvorrichtung 101 weist weiterhin eine zweite Werkstückhalterung 109 mit einer Mehrzahl von ersten Spannelementen 111 auf, die an dem ersten Werkstücktisch 104 angeordnet sind, wobei die ersten Spannelemente 111 ebenfalls erste Spannbacken 117 und zweite Spannbacken 118 aufweisen. Diese können ebenfalls relativ zueinander und insbesondere auch zum ersten Werkstücktisch 103 in zumindest einer Dimension oder in zwei Dimensionen verlagerbar sein. Dabei kann aber auch die untere Spannbacke 117 in vertikaler Richtung 119 feststehend angeordnet sein, während die obere Spannbacke 118 in vertikaler Richtung 119 verlagerbar ausgebildet sein kann. Optional sind die Spannbacken 117 und/oder Spannbacken 118 des Werkstücktischs 103 und/oder des Werkstücktischs 104 zumindest in der vertikalen Richtung 119 und gegebenenfalls in der dazu senkrechten Richtung 120 verlagerbar.

Optional können auch die Werkstücktische 103, 104 in der Längsrichtung gemäß Pfeil 105 und in einer dazu senkrechten Richtung 120 verlagerbar ausgebildet sein. Dabei muss nicht der gesamte Werkstücktisch verlagerbar sein, sondern es würde ausreichen, wenn eine Art Konsole mit den Werkstückhalterungen in Richtung 120 verlagerbar wären. So wäre es vorteilhaft, wenn der erste und/oder der zweite Werkstücktisch 103, 104 in einer zur Längsrichtung 105 senkrechten ersten Richtung 120 verlagerbar wären.

Gemäß einem Erfindungsgedanken ist es bei dem Ausführungsbeispiel der Figuren 3 und 4 vorteilhaft, wenn die ersten Spannelemente 110 bzw. deren erste und/oder zweite Spannbacken 117, 118 jeweils in einer ersten senkrecht zur Längsrichtung 105 ausgerichteten Richtung 120 verlagerbar sind und gegebenenfalls in einer zweiten senkrecht zur Längsrichtung 105 und zur ersten Richtung 120 ausgerichteten Richtung 119 verlagerbar sind und/oder die zweiten Spannelemente 111 bzw. deren erste und/oder zweite Spannbacken 117, 118 jeweils in einer ersten senkrecht zur Längsrichtung 105 ausgerichteten Richtung 120 verlagerbar sind und gegebenenfalls in einer zweiten senkrecht zur Längsrichtung 105 und zur ersten Richtung 120 ausgerichteten Richtung 119 verlagerbar sind.

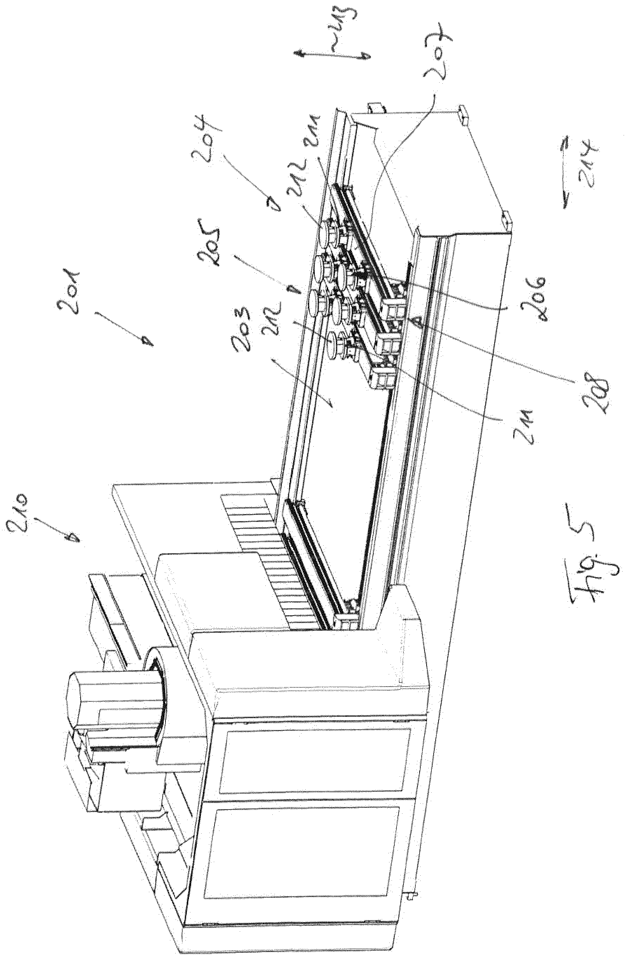

Die Figur 5 zeigt eine weitere erfindungsgemäße Bearbeitungsvorrichtung 201, insbesondere zum Bearbeiten von Werkstücken aus Holz, Holzwerkstoffen, Kunststoff oder dergleichen. Dabei können die Werkstücke beispielsweise eher längliche, balkenartige Werkstücke oder eher flache, eher zweidimensionale, brettartige Werkstücke sein.

Die Bearbeitungsvorrichtung 201 weist einen Grundkörper 203 auf. Dieser ist vorzugsweise fest und nicht verlagerbar angeordnet. Alternativ kann dieser Grundkörper 203 aber auch verlagerbar ausgebildet sein.

Der Grundkörper 203 weist eine Werkstücktisch 204 mit einer Mehrzahl von Spannelementen 205, 206 auf, welche zum Spannen eines Werkstücks dienen, damit das Werkstück zur Bearbeitung sicher gehalten werden kann.

Optional ist eine nicht dargestellte Zuführvorrichtung vorgesehen, welche dazu dient, ein Werkstück dem Werkstücktisch 204 zuzuführen und das Werkstück in den jeweiligen Spannelementen 205, 206 zu platzieren.

Weiterhin ist ein Bearbeitungszentrum 210 vorgesehen, in welchem zumindest ein Werkzeugschlitten verlagerbar angeordnet ist, um ein Werkzeug verlagern zu können. Die Spannelemente 205, 206 sind relativ zum Grundkörper 203 verlagerbar ausgebildet, so dass mit den Spannelementen 205, 206 ein Werkstück in das Bearbeitungszentrum 210 verfahren werden kann, um es darin bearbeiten zu können. Alternativ dazu kann auch das Bearbeitungszentrum 210 verlagerbar ausgebildet sein, um es über den Grundkörper zu verlagern, um ein Werkstück zu bearbeiten.

Wie es die Figur 5 zeigt, sind die Spannelemente 205, 206 jeweils paarweise auf einer verlagerbaren Brücke 207 des Werkstücktischs 204 angeordnet, wobei die jeweilige Brücke 207 auf dem Grundkörper 203 beiderseits geführt ist.

Die Bearbeitungsvorrichtung 201 weist somit der Werkstücktisch 204 eine Mehrzahl von ersten Spannelementen 205 auf, wobei die ersten Spannelemente 205 erste Spannbacken 211 und zweite Spannbacken 212 aufweisen, die relativ zueinander in zumindest einer Dimension oder in zwei Dimensionen verlagerbar sind. Dabei sind die Spannbacken 211, 212 zumindest in der vertikalen Richtung 213 und gegebenenfalls in der dazu senkrechten Richtung 214 relativ zum Grundkörper 203 verlagerbar. Die Bearbeitungsvorrichtung 201 weist weiterhin eine Mehrzahl von zweiten Spannelementen 206 auf, wobei die zweiten Spannelemente 206 ebenfalls erste Spannbacken 211 und zweite Spannbacken 212 aufweisen. Diese können ebenfalls relativ zueinander in zumindest einer Dimension oder in zwei Dimensionen verlagerbar sein. Dabei kann aber auch die untere Spannbacke 211 in vertikaler Richtung 213 feststehend angeordnet sein, während die obere Spannbacke 212 in vertikaler Richtung 213 verlagerbar ausgebildet sein kann. Optional sind die Spannbacken 211 und/oder Spannbacken 212 des Werkstücktischs 204 zumindest in der vertikalen Richtung 213 und gegebenenfalls in der dazu senkrechten Richtung 214 verlagerbar.

Die Bearbeitungsvorrichtung 201 ist dabei entsprechend ausgebildet, dass der erste Werkstücktisch 204 eine Mehrzahl von ersten Spannelementen 205 aufweist, die an dem Grundkörper 203 angeordnet sind, wobei die ersten Spannelemente 205 erste und zweite Spannbacken 211, 212 aufweisen, die relativ zueinander und insbesondere auch zum Grundkörper 203 in zumindest einer Dimension oder in zwei Dimensionen verlagerbar sind und wobei ein zweiter Werkstücktisch 208 eine Mehrzahl von zweiten Spannelementen 206 aufweist, die an dem Grundkörper 203 angeordnet sind, wobei die zweiten Spannelemente 206 erste und zweite Spannbacken 211, 212 aufweisen, die relativ zueinander und insbesondere auch zum Grundkörper 203 in zumindest einer Dimension oder in zwei Dimensionen verlagerbar sind.

Dabei kann es auch optional vorteilhaft sein, wenn die ersten Spannelemente 205 bzw. deren erste und/oder zweite Spannbacken 211, 212 auch in einer dritten Dimension verlagerbar sind und/oder die zweiten Spannelemente 206 bzw. deren erste und/oder zweite Spannbacken 211, 212 auch in einer dritten Dimension verlagerbar sind.

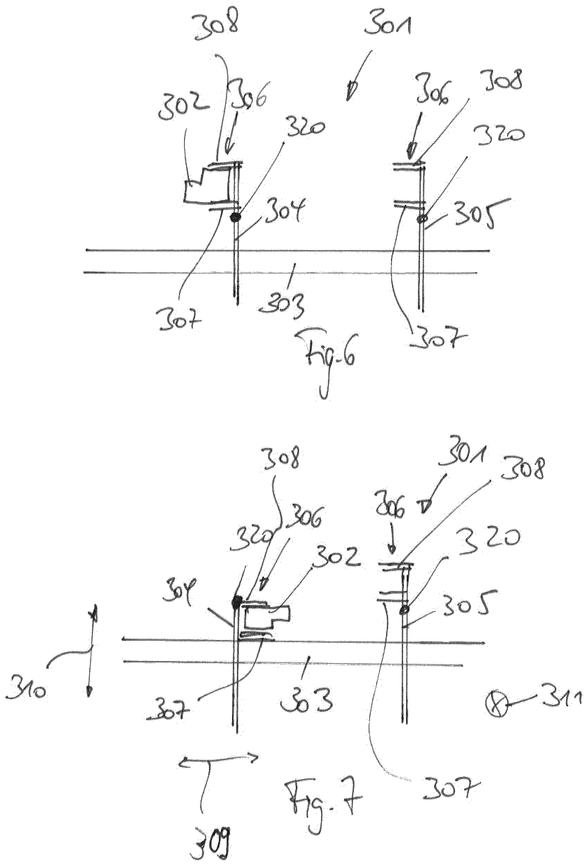

Die Figuren 6 und 7 zeigen ein weiteres Ausführungsbeispiel ähnlich dem Beispiel der Figuren 1 und 2. Die Figuren 6 und 7 zeigen jeweils in einer schematischen Darstellung zur Erläuterung der Erfindung eine Betriebssituation, in welcher eine erfindungsgemäße Bearbeitungsvorrichtung sein kann, um ein Werkstück von einer Werkstückhalterung zu einer anderen Werkstückhalterung zu übergeben.

Die erfindungsgemäße Bearbeitungsvorrichtung 301, insbesondere zum Bearbeiten von Werkstücken 302 aus Holz, Holzwerkstoffen, Kunststoff oder dergleichen, weist zumindest einen Werkstücktisch 303 auf. Auf dem Werkstücktisch 303 kann das Werkstück 302 mittels einer Werkstückhalterung 304, 305 aufgespannt und somit lagefest gehalten werden, so dass es bearbeitet werden kann.

Die erfindungsgemäße Bearbeitungsvorrichtung 301 weist zumindest eine erste Werkstückhalterung 304 zum Halten zumindest eines Werkstücks 302 auf, wobei weiterhin zumindest eine zweite Werkstückhalterung 305 zum Halten zumindest eines Werkstücks 302 vorgesehen ist. Dabei ist es zweckmäßig, wenn zumindest zwei solche Werkstückhalterungen 304, 305 vorgesehen sind, weil eine vollständige Bearbeitung eines Werkstücks 302 in einer Aufspannung in einer Werkstückhalterung 304, 305 meist nicht möglich ist, so dass in einer Aufspannung in einer Werkstückhalterung 304, 305 das Werkstück 302 nur teilweise bearbeitet wird, anschließend das Werkstück 2 in eine zweite Werkstückhalterung 305, 304 umgespannt wird und danach weiter bearbeitet wird.

Die Figuren 6 und 7 zeigen, dass zumindest die Werkstückhalterung 304 und gegebenenfalls auch die Werkstückhalterung 305 oder umgekehrt in Gelenk 320 aufweist bzw. aufweisen. Dadurch kann die Werkstückhalterung 304, 305 umgestürzt, wie um etwa 180° verkippt werden, wie es in Figur 7 gezeigt ist, so dass das Werkstück 302 von der Werkstückhalterung 304 zur Werkstückhalterung 305 übergeben werden kann.

Die Figur 6 zeigt, dass die beiden Werkstückhalterungen 304, 305 voneinander entfernt angeordnet sind, wobei das Werkstück 302 in der Werkstückhalterung 304 eingespannt ist. Dabei weisen die Werkstückhalterung 304 und auch die Werkstückhalterung 305 jeweils Spannelemente 306 auf, die erste Spannbacken 307 und zweite Spannbacken 308 aufweisen, welche relativ zueinander verfahrbar sind, um ein Werkstück 302 dazwischen einspannen zu können. Die ersten Spannbacken 307 sind beispielsweise die unteren Spannbacken und die zweiten Spannbacken 308 sind beispielsweise die oberen Spannbacken. In Figur 6 ist zu erkennen, dass die beiden Werkstückhalterungen mit ihren Spannbacken auf gleicher vertikaler Höhe angeordnet sind. Dies kann eine vertikale Position sein, in welcher eine Bearbeitung des Werkstücks 302 mittels eines nicht gezeigten Werkzeugs durchführbar ist. In Figur 6 ist zu erkennen, dass die linke Seite des Werkstücks 302 bearbeitet ist, während die rechte Seite des Werkstücks 302 in der Werkstückhalterung 304 eingeklemmt ist.

In Figur 7 ist zu erkennen, dass die Werkstückhalterung 304 gestürzt ist und relativ zu dem Werkstücktisch 303 hin zur Werkstückhalterung 305 verlagert ist. Die Werkstückhalterung 304 ist dabei relativ zur Werkstückhalterung 305 entlang der Richtung gemäß Pfeil 309, der Längsrichtung, verschiebbar ausgebildet. Die Verschiebung kann mittels eines Antriebs oder manuell erfolgen. Auch ist in Figur 7 zu erkennen, dass die Werkstückhalterung 304 relativ zur Höhe der Werkstückhalterung 305 und zum Werkstücktisch 303 in vertikaler Richtung gemäß Pfeil 310 nach unten verlagert ist. Dabei ist die Werkstückhalterung 304 mit den Spannbacken 307, 308 als Ganzes mit dem eingespannten Werkstück 302 nach unten verschoben. So kann das Werkstück lateral in die auseinandergefahrenen Spannbacken 307, 308 der Werkstückhalterung 305 eingefahren und dort im Wesentlichen durch Herabfahren der Spannbacken 308 geklemmt werden. Dadurch wird erreicht, dass das Werkstück in vertikaler Richtung 310 versetzt in die Werkstückhalterung 305 eingesetzt und darin gespannt wird.

Das Werkstück 302 kann also bei einem Umspannen von der ersten Werkstückhalterung 304 in die zweite Werkstückhalterung 305 in zumindest zwei Dimensionen, also entlang Pfeil 309 und entlang Pfeil 310, positioniert werden. Vorteilhaft mag es bei einem anderen Ausführungsbeispiel auch sein, wenn das Werkstück 302 auch noch in einer dritten Dimension gemäß Pfeil 311 positionierbar ist.

Dabei ist also die erste Werkstückhalterung 304 relativ zur zweiten Werkstückhalterung 305 und/oder die zweite Werkstückhalterung 305 relativ zur ersten Werkstückhalterung 304 in zumindest zwei, vorteilhaft in drei Dimensionen, verlagerbar. Dadurch kann je nach Bearbeitung des Werkstücks 302 und seiner Kontur nach der Bearbeitung dieses positioniert werden, wie es nötig ist, um es in die jeweils andere Werkstückhalterung 304, 305 umzuspannen.

Gemäß dem Ausführungsbeispiel der Figur 6 ist ein Werkstücktisch 303 vorgesehen, insbesondere nur ein Werkstücktisch 303, und die erste Werkstückhalterung 304 und/oder die zweite Werkstückhalterung 5 ist bzw. sind relativ zu dem Werkstücktisch 303 verlagerbar angeordnet.

Alternativ können auch zwei insbesondere verlagerbare Werkstücktische vorgesehen sein, wobei dann die erste Werkstückhalterung mit einem ersten Werkstücktisch verbunden ist und mit diesem verlagerbar angeordnet ist und wobei die zweite Werkstückhalterung mit dem zweiten Werkstücktisch verbunden und mit diesem verlagerbar angeordnet ist.

Die erfindungsgemäßen Vorrichtungen erlauben die Bearbeitung eines Werkstücks an drei der vier umlaufenden Kanten in einer ersten Aufspannung, so dass nach dem Umspannen eine vierte Kante des Werkstücks bearbeitbar ist. Die erfindungsgemäßen Vorrichtungen erlauben auch die Bearbeitung eines Werkstücks an zwei der vier umlaufenden Kanten in einer ersten Aufspannung, so dass nach dem Umspannen eine dritte und eine vierte Kante des Werkstücks bearbeitbar ist.

### Bezugszeichenliste

- 1: Bearbeitungsvorrichtung
- 2: Werkstück
- 3: Werkstücktisch
- 4: erste Werkstückhalterung
- 5: zweite Werkstückhalterung
- 6: Spannelement
- 7: erste Spannbacke
- 8: zweite Spannbacke
- 9: Pfeil bzw. Längsrichtung
- 10: Pfeil bzw. vertikale Richtung
- 11: Pfeil
- 101: Bearbeitungsvorrichtung
- 102: Werkstück
- 103: erster Werkstücktisch
- 104: zweiter Werkstücktisch
- 105: Pfeil bzw. Längsrichtung
- 106: Vorschubeinrichtung
- 107: Vorschubeinrichtung
- 108: erste Werkstückhalterung
- 109: zweite Werkstückhalterung
- 110: erstes Spannelement
- 111: zweites Spannelement
- 112: Zuführvorrichtung
- 113: Vorrichtungsgestell
- 114: Führungsvorrichtung
- 115: Werkzeugschlitten
- 116: Werkzeug
- 117: erste Spannbacke
- 118: zweite Spannbacke
- 119: vertikale Richtung
- 120: senkrechte Richtung
- 201: Bearbeitungsvorrichtung
- 203: Grundkörper
- 204: Werkstücktisch
- 205: erstes Spannelement
- 206: zweites Spannelement
- 207: Brücke
- 208: Werkstücktisch
- 210: Bearbeitungszentrum
- 211: erste Spannbacke
- 212: zweite Spannbacke
- 213: vertikale Richtung
- 214: Richtung
- 301: Bearbeitungsvorrichtung
- 302: Werkstück
- 303: Werkstücktisch
- 304: erste Werkstückhalterung
- 305: zweite Werkstückhalterung
- 306: Spannelement
- 307: erste Spannbacke
- 308: zweite Spannbacke
- 309: Pfeil bzw. Längsrichtung
- 310: Pfeil bzw. vertikale Richtung
- 311: Pfeil
- 320: Gelenk

## Patentansprüche

1. Bearbeitungsvorrichtung (1, 101, 201, 301), insbesondere zum Bearbeiten von Werkstücken (2, 102, 302) aus Holz, Holzwerkstoffen, Kunststoff oder dergleichen, mit zumindest einem Werkstücktisch (3, 103, 104, 204, 303) mit einer ersten Werkstückhalterung (4, 108, 304) zum Halten zumindest eines Werkstücks (2, 102, 302), weiterhin mit einer zweiten Werkstückhalterung (5, 109, 208, 305) zum Halten zumindest des Werkstücks (2, 102, 302), wobei das Werkstück (2, 102, 302) bei einem Umspannen von der ersten Werkstückhalterung (4, 108, 304) in die zweite Werkstückhalterung (5, 109, 305) in zumindest zwei Dimensionen, vorteilhaft in drei Dimensionen, positionierbar ist, **dadurch gekennzeichnet, dass** die erste Werkstückhalterung (4, 108, 304) relativ zur zweiten Werkstückhalterung (5, 109, 305) und/oder die zweite Werkstückhalterung (5, 109, 305) relativ zur ersten Werkstückhalterung (4, 108, 304) in zumindest zwei, vorteilhaft in drei Dimensionen, verlagerbar ist, um das Werkstück (2, 102, 302) unmittelbar von der ersten Werkstückhalterung (4, 108, 304) zur zweiten Werkstückhalterung (5, 109, 305) übergeben zu können.

2. Bearbeitungsvorrichtung (1, 101, 201, 301) nach Anspruch 1, **dadurch gekennzeichnet, dass** ein Werkstücktisch (3, 103, 104, 204, 303) vorgesehen ist, insbesondere nur ein Werkstücktisch (3, 103, 104, 204, 303), und die erste Werkstückhalterung (4, 108, 304) und/oder die zweite Werkstückhalterung (5, 109, 305) relativ zu dem Werkstücktisch (3, 103, 104, 204, 303) verlagerbar angeordnet ist bzw. sind.

3. Bearbeitungsvorrichtung (1, 101, 201) nach einem der vorhergehenden Ansprüche, **dadurch gekennzeichnet, dass** zwei verlagerbare Werkstücktische (3, 103, 104, 204) vorgesehen sind, wobei die erste Werkstückhalterung (4, 108) mit einem ersten Werkstücktisch (3, 103, 204) verbunden und mit diesem verlagerbar angeordnet ist und die zweite Werkstückhalterung (5, 109) mit dem zweiten Werkstücktisch (104) verbunden und mit diesem verlagerbar angeordnet ist.

4. Bearbeitungsvorrichtung (1, 101, 201) nach Anspruch 3, **dadurch gekennzeichnet, dass** die erste Werkstückhalterung (4, 108) eine Mehrzahl von ersten Spannelementen (6, 110, 205) aufweist, die an dem ersten Werkstücktisch (3, 103, 204) angeordnet sind, wobei die ersten Spannelemente (6, 110, 205) erste und zweite Spannbacken (7, 8, 117, 118, 211, 212) aufweisen, die relativ zueinander und insbesondere auch zum ersten Werkstücktisch (3, 103, 204) in zumindest einer Dimension oder in zwei Dimensionen verlagerbar sind und wobei die zweite Werkstückhalterung (5, 109) eine Mehrzahl von zweiten Spannelementen (6, 111, 206) aufweist, die an dem zweiten Werkstücktisch (104,208) angeordnet sind, wobei die zweiten Spannelemente (6, 111, 206) erste und zweite Spannbacken (7, 8, 117, 118, 211, 212) aufweisen, die relativ zueinander und insbesondere auch zum zweiten Werkstücktisch (104,208) in zumindest einer Dimension oder in zwei Dimensionen verlagerbar sind.

5. Bearbeitungsvorrichtung (1, 101, 201) nach Anspruch 3 oder 4, **dadurch gekennzeichnet, dass** der erste und/oder der zweite Werkstücktisch (3, 103, 104, 204) in einer Längsrichtung (9, 105) verlagerbar ist bzw. sind.

6. Bearbeitungsvorrichtung (1, 101, 201) nach Anspruch 5, **dadurch gekennzeichnet, dass** der erste und/oder der zweite Werkstücktisch (3, 103, 104, 204) in zumindest einer zur Längsrichtung (105) senkrechten ersten Richtung (119,120) verlagerbar ist bzw. sind und/oder in zwei zur Längsrichtung (105) senkrechte Richtungen (119,120) verlagerbar ist bzw. sind.

7. Bearbeitungsvorrichtung (1, 101, 201) nach Anspruch 5 oder 6, **dadurch gekennzeichnet, dass** die ersten Spannelemente (6, 110, 205) bzw. deren erste und/oder zweite Spannbacken (7, 8, 117, 118, 211, 212) jeweils in einer ersten senkrecht zur Längsrichtung (105) ausgerichteten Richtung (120) verlagerbar sind und gegebenenfalls in einer zweiten senkrecht zur Längsrichtung (105) und zur ersten Richtung (120) ausgerichteten Richtung (119) verlagerbar sind und/oder die zweiten Spannelemente (6, 111, 206) bzw. deren erste und/oder zweite Spannbacken (7, 8, 117, 118, 211, 212) jeweils in einer ersten senkrecht zur Längsrichtung (105) ausgerichteten Richtung (120) verlagerbar sind und gegebenenfalls in einer zweiten senkrecht zur Längsrichtung (105) und zur ersten Richtung ausgerichteten Richtung (119) verlagerbar sind.

8. Bearbeitungsvorrichtung (1, 101, 201, 301) nach Anspruch 2, **dadurch gekennzeichnet, dass** der eine Werkstücktisch (3, 103, 104, 204, 303) nicht verlagerbar angeordnet ist.

9. Bearbeitungsvorrichtung (1, 101, 201, 301) nach Anspruch 8, **dadurch gekennzeichnet, dass** die erste Werkstückhalterung (4, 108, 304) eine Mehrzahl von ersten Spannelementen (6, 110, 205) aufweist, die an dem Werkstücktisch (3, 103, 104, 204, 303) angeordnet sind, wobei die ersten Spannelemente (6, 110, 205) erste und zweite Spannbacken (7, 8, 117, 118, 211, 212) aufweisen, die relativ zueinander und insbesondere auch zum Werkstücktisch (3, 103, 104, 204, 303) in zumindest einer Dimension oder in zwei Dimensionen verlagerbar sind und wobei die zweite Werkstückhalterung (5, 109) eine Mehrzahl von zweiten Spannelementen (6, 111, 206) aufweist, die an dem Werkstücktisch (3, 103, 104, 204, 303) angeordnet sind, wobei die zweiten Spannelemente (6, 110, 111, 206) erste und zweite Spannbacken (7, 8, 117, 118, 211, 212) aufweisen, die relativ zueinander und insbesondere auch zum Werkstücktisch (3, 103, 104, 204) in zumindest einer Dimension oder in zwei Dimensionen verlagerbar sind.

10. Bearbeitungsvorrichtung (1, 101, 201, 301) nach Anspruch 9, **dadurch gekennzeichnet, dass** die ersten Spannelemente (6, 110, 205) bzw. deren erste und/oder zweite Spannbacken (7, 8, 117, 118, 211, 212) auch in dritten Dimension verlagerbar sind und/oder die zweiten Spannelemente (6, 111, 206) bzw. deren erste und/oder zweite Spannbacken (7, 8, 117, 118, 211, 212) auch in einer dritten Dimension verlagerbar sind.

11. Bearbeitungsvorrichtung (1, 101, 201, 301) nach einem der vorhergehenden Ansprüche, **dadurch gekennzeichnet, dass** eine Zuführvorrichtung (112) vorgesehen ist, mittels welcher ein Werkstück (2, 102) einer der Werkstückhalterungen (4, 5, 108, 109) zuführbar ist.

## Claims

1. Machining device (1, 101, 201, 301), in particular for machining workpieces (2, 102, 302) made of wood, wood-based materials, plastic or the like, comprising at least one workpiece table (3, 103, 104, 204, 303) having a first workpiece holder (4, 108, 304) for holding at least one workpiece (2, 102, 302), further having a second workpiece holder (5, 109, 208, 305) for holding at least the workpiece (2, 102, 302), wherein, when the workpiece (2, 102, 302) is transferred from the first workpiece holder (4, 108, 304) to the second workpiece holder (5, 109, 305), it can be positioned in at least two dimensions, advantageously in three dimensions, **characterised in that** the first workpiece holder (4, 108, 304) is displaceable relative to the second workpiece holder (5, 109, 305) and/or the second workpiece holder (5, 109, 305) is displaceable relative to the first workpiece holder (4, 108, 304) in at least two, advantageously in three dimensions, so as to enable the workpiece (2, 102, 302) to be transferred directly from the first workpiece holder (4, 108, 304) to the second workpiece holder (5, 109, 305).

2. Machining device (1, 101, 201, 301) according to claim 1, **characterised in that** a workpiece table (3, 103, 104, 204, 303) is provided, in particular only one workpiece table (3, 103, 104, 204, 303), and the first workpiece holder (4, 108, 304) and/or the second workpiece holder (5, 109, 305) is or are disposed so as to be displaceable relative to the workpiece table (3, 103, 104, 204, 303).

3. Machining device (1, 101, 201) according to any one of the preceding claims, **characterised in that** two displaceable workpiece tables (3, 103, 104, 204) are provided, wherein the first workpiece holder (4, 108) is connected to a first workpiece table (3, 103, 204) and is disposed so as to be displaceable therewith, and the second workpiece holder (5, 109) is connected to the second workpiece table (104) and is disposed so as to be displaceable therewith.

4. Machining device (1, 101, 201) according to claim 3, **characterised in that** the first workpiece holder (4, 108) has a plurality of first clamping elements (6, 110, 205) which are disposed on the first workpiece table (3, 103, 204), wherein the first clamping elements (6, 110, 205) have first and second clamping jaws (7, 8, 117, 118, 211, 212), which are displaceable relative to one another and, in particular, also to the first workpiece table (3, 103, 204) in at least one dimension or in two dimensions and wherein the second workpiece holder (5, 109) has a plurality of second clamping elements (6, 111, 206) disposed on the second workpiece table (104, 208), wherein the second clamping elements (6, 111, 206) have first and second clamping jaws (7, 8, 117, 118, 211, 212) which are displaceable relative to one another and, in particular, also to the second workpiece table (104, 208) in at least one dimension or in two dimensions.

5. Machining device (1, 101, 201) according to claim 3 or 4, **characterised in that** the first and/or the second workpiece table (3, 103, 104, 204) is or are displaceable in a longitudinal direction (9, 105).

6. Machining device (1, 101, 201) according to claim 5, **characterised in that** the first and/or second workpiece table (3, 103, 104, 204) is or are displaceable in at least one first direction (119, 120) perpendicular to the longitudinal direction (105) and/or is or are displaceable in two directions (119, 120) perpendicular to the longitudinal direction (105).

7. Machining device (1, 101, 201) according to claim 5 or 6, **characterised in that** the first clamping elements (6, 110, 205) or their first and/or second clamping jaws (7, 8, 117, 118, 211, 212) are each displaceable in a first direction (120) aligned perpendicular to the longitudinal direction (105) and, if applicable, are displaceable in a second direction (119) aligned perpendicular to the longitudinal direction (105) and to the first direction (120), and/or the second clamping elements (6, 111, 206) or their first and/or second clamping jaws (7, 8, 117, 118, 211, 212) are each displaceable in a first direction (120) aligned perpendicular to the longitudinal direction (105) and, if applicable, are displaceable in a second direction (119) aligned perpendicular to the longitudinal direction (105) and to the first direction.

8. Machining device (1, 101, 201, 301) according to claim 2, **characterised in that** the one workpiece table (3, 103, 104, 204, 303) is disposed so as not to be displaceable.

9. Machining device (1, 101, 201, 301) according to claim 8, **characterised in that** the first workpiece holder (4, 108, 304) has a plurality of first clamping elements (6, 110, 205) which are disposed on the workpiece table (3, 103, 104, 204, 303), wherein the first clamping elements (6, 110, 205) have first and second clamping jaws (7, 8, 117, 118, 211, 212), which are displaceable relative to one another and, in particular, also to the workpiece table (3, 103, 104, 204, 303) in at least one dimension or in two dimensions and wherein the second workpiece holder (5, 109) has a plurality of second clamping elements (6, 111, 206), which are disposed on the workpiece table (3, 103, 104, 204, 303), wherein the second clamping elements (6, 110, 111, 206) have first and second clamping jaws (7, 8, 117, 118, 211, 212), which are displaceable relative to one another and, in particular, also to the workpiece table (3, 103, 104, 204) in at least one dimension or in two dimensions.

10. Machining device (1, 101, 201, 301) according to claim 9, **characterised in that** the first clamping elements (6, 110, 205) or their first and/or second clamping jaws (7, 8, 117, 118, 211, 212) are also displaceable in a third dimension and/or the second clamping elements (6, 111, 206) or their first and/or second clamping jaws (7, 8, 117, 118, 211, 212) are also displaceable in a third dimension.

11. Machining device (1, 101, 201, 301) according to any one of the preceding claims, **characterised in that** a feed device (112) is provided by means of which a workpiece (2, 102) can be fed to one of the workpiece holders (4, 5, 108, 109).

## Revendications

1. Dispositif d'usinage (1, 101, 201, 301), en particulier pour l'usinage de pièces (2, 102, 302) en bois, matériaux dérivés du bois, plastique ou similaire, avec au moins une table porte-pièce (3, 103, 104, 204, 303) avec un premier support de pièce (4, 108, 304) pour maintenir au moins une pièce (2, 102, 302), en outre avec un deuxième support de pièce (5, 109, 208, 305) pour maintenir au moins la pièce (2, 102, 302), dans lequel la pièce (2, 102, 302) est positionnable lors d'un resserrage du premier support de pièce (4, 108, 304) dans le deuxième support de pièce (5, 109, 305) dans au moins deux dimensions, avantageusement dans trois dimensions, **caractérisé en ce que** le premier support de pièce (4, 108, 304) est déplaçable par rapport au deuxième support de pièce (5, 109, 305) et/ou le deuxième support de pièce (5, 109, 305) est déplaçable par rapport au premier support de pièce (4, 108, 304) dans au moins deux, avantageusement dans trois dimensions, pour pouvoir délivrer directement la pièce (2, 102, 302) du premier support de pièce (4, 108, 304) au deuxième support de pièce (5, 109, 305).

2. Dispositif d'usinage (1, 101, 201, 301) selon la revendication 1, **caractérisé en ce qu'**une table porte-pièce (3, 103, 104, 204, 303) est prévue, en particulier seulement une table porte-pièce (3, 103, 104, 204, 303), et le premier support de pièce (4, 108, 304) et/ou le deuxième support de pièce (5, 109, 305) est ou sont disposés de manière déplaçable par rapport à la table porte-pièce (3, 103, 104, 204, 303).

3. Dispositif d'usinage (1, 101, 201) selon l'une quelconque des revendications précédentes, **caractérisé en ce que** deux tables porte-pièce (3, 103, 104, 204) déplaçables sont prévues, dans lequel le premier support de pièce (4, 108) est relié à une première table porte-pièce (3, 103, 204) et disposé de manière déplaçable avec celle-ci et le deuxième support de pièce (5, 109) est relié à la deuxième table porte-pièce (104) et disposé de manière déplaçable avec celle-ci.

4. Dispositif d'usinage (1, 101, 201) selon la revendication 3, **caractérisé en ce que** le premier support de pièce (4, 108) présente une pluralité de premiers éléments de serrage (6, 110, 205) qui sont disposés sur la première table porte-pièce (3, 103, 204), dans lequel les premiers éléments de serrage (6, 110, 205) présentent des première et deuxième mâchoires de serrage (7, 8, 117, 118, 211, 212), qui sont déplaçables l'une par rapport à l'autre et en particulier également par rapport à la première table porte-pièce (3, 103, 204) dans au moins une dimension ou dans deux dimensions et dans lequel le deuxième support de pièce (5, 109) présente une pluralité de deuxièmes éléments de serrage (6, 111, 206), qui sont disposés sur la deuxième table porte-pièce (104, 208), dans lequel les deuxièmes éléments de serrage (6, 111, 206) présentent des première et deuxième mâchoires de serrage (7, 8, 117, 118, 211, 212) qui sont déplaçables l'une par rapport à l'autre et en particulier également par rapport à la deuxième table porte-pièce (104, 208) dans au moins une dimension ou dans deux dimensions.

5. Dispositif d'usinage (1, 101, 201) selon la revendication 3 ou 4, **caractérisé en ce que** la première et/ou la deuxième table porte-pièce (3, 103, 104, 204) est ou sont déplaçables dans une direction longitudinale (9, 105).

6. Dispositif d'usinage (1, 101, 201) selon la revendication 5 **caractérisé en ce que** la première et/ou la deuxième table porte-pièce (3, 103, 104, 204) est ou sont déplaçables dans au moins une première direction (119, 120) perpendiculaire à la direction longitudinale (105) et/ou est ou sont déplaçables dans deux directions (119, 120) perpendiculaires à la direction longitudinale (105).

7. Dispositif d'usinage (1, 101, 201) selon la revendication 5 ou 6, **caractérisé en ce que** les premiers éléments de serrage (6, 110, 205) ou leurs première et/ou deuxième mâchoires de serrage (7, 8, 117, 118, 211, 212) sont déplaçables respectivement dans une première direction (120) orientée perpendiculairement à la direction longitudinale (105) et, le cas échéant, sont déplaçables dans une deuxième direction (119) orientée perpendiculairement à la direction longitudinale (105) et à la première direction (120) et/ou les deuxièmes éléments de serrage (6, 111, 206) ou leurs premières et/ou deuxièmes mâchoires de serrage (7, 8, 117, 118, 211, 212) sont déplaçables respectivement dans une première direction (120) orientée perpendiculairement à la direction longitudinale (105) et, le cas échéant, sont déplaçables dans une deuxième direction (119) orientée perpendiculairement à la direction longitudinale (105) et à la première direction.

8. Dispositif d'usinage (1, 101, 201, 301) selon la revendication 2, **caractérisé en ce qu'**une table porte-pièce (3, 103, 104, 204, 303) n'est pas disposée de manière déplaçable.

9. Dispositif d'usinage (1, 101, 201, 301) selon la revendication 8, **caractérisé en ce que** le premier support de pièce (4, 108, 304) présente une pluralité de premiers éléments de serrage (6, 110, 205) qui sont disposés sur la table porte-pièce (3, 103, 104, 204, 303), dans lequel les premiers éléments de serrage (6, 110, 205) présentent des première et deuxième mâchoires de serrage (7, 8, 117, 118, 211, 212), qui sont déplaçables les unes par rapport aux autres et en particulier également par rapport à la table porte-pièce (3, 103, 104, 204, 303) dans au moins une dimension ou dans deux dimensions et dans lequel le deuxième support de pièce (5, 109) présente une pluralité de deuxièmes éléments de serrage (6, 111, 206), qui sont disposés sur la table porte-pièce (3, 103, 104, 204, 303), dans lequel les deuxièmes éléments de serrage (6, 110, 111, 206) présentent des première et deuxième mâchoires de serrage (7, 8, 117, 118, 211, 212) qui sont déplaçables les unes par rapport aux autres et en particulier également par rapport à la table porte-pièce (3, 103, 104, 204) dans au moins une dimension ou dans deux dimensions.

10. Dispositif d'usinage (1, 101, 201, 301) selon la revendication 9, **caractérisé en ce que** les premiers éléments de serrage (6, 110, 205) ou leurs première et/ou deuxième mâchoires de serrage (7, 8, 117, 118, 211, 212) sont également déplaçables en troisième dimension et/ou les deuxièmes éléments de serrage (6, 111, 206) ou leurs première et/ou deuxième mâchoires de serrage (7, 8, 117, 118, 211, 212) sont également déplaçables dans une troisième dimension.

11. Dispositif d'usinage (1, 101, 201, 301) selon l'une quelconque des revendications précédentes, **caractérisé en ce qu'**un dispositif d'alimentation (112) est prévu au moyen duquel une pièce (2, 102) peut être amenée à l'un des supports de pièce (4, 5, 108, 109).
